# EUROPEAN PATENT SPECIFICATION

(11) **EP 4 140 173 B1**
(45) Date of publication and mention of the grant of the patent: **20.08.2025**
(21) Application number: 20937304.2
(22) Date of filing: 29.05.2020
(51) Int. Cl.: H04W 24/04

(54) **BANDWIDTH PART SWITCHING IN 5G NEW RADIO DUAL CONNECTIVITY**
BANDBREITENTEILUMSCHALTUNG IN 5G-NEUFUNK-DUALKONNEKTIVITÄT
COMMUTATION DE PARTIE DE BANDE PASSANTE DANS UNE CONNECTIVITÉ DOUBLE DE NOUVELLE RADIO 5G

(43) Date of publication of application: 01.03.2023
(73) Proprietor: Apple Inc., Cupertino CA 95014 (US)
(72) Inventor: RAGHAVAN, Manasa, Cupertino, California 95014 (US); CUI, Jie, Cupertino, California 95014 (US); TANG, Yang, Cupertino, California 95014 (US); HE, Hong, Cupertino, California 95014 (US); ZHANG, Dawei, Cupertino, California 95014 (US); CHEN, Yuqin, Beijing 100022 (CN)
(74) Representative: COPA Copenhagen Patents
(86) International application number: PCT/CN2020/093251
(87) International publication number: WO 2021/237669

(56) References cited:
- EP-A1- 3 535 912
- WO-A1-2019/097432
- CN-A- 104 509 018
- ZTE: "Draft CR on PUCCH transmission drop due to BWP switching", vol. RAN WG1, no. Reno, USA; 20190513 - 20190517, 3 May 2019 (2019-05-03), XP051708441, Retrieved from the Internet <URL:http://www.3gpp.org/ftp/tsg%5Fran/WG1%5FRL1/TSGR1%5F97/Docs/R1%2D1906406%2Ezip> [retrieved on 20190503]
- NOKIA, NOKIA SHANGHAI BELL: "On remaining aspects of NR CA/DC and BWPs", 3GPP DRAFT; R1-1715755 ON REMAINING ASPECTS OF NR CADC AND BWPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Nagoya, Japan; 20170918 - 20170921, 11 September 2017 (2017-09-11), Mobile Competence Centre ; 650, route des Lucioles ; F-06921 Sophia-Antipolis Cedex ; France , XP051329280

## Description

### BACKGROUND

To speed up the deployment of the 5G new radio (NR) networks, a non-standalone version of 5G NR networks has been used in conjunction with existing long term evolution (LTE) networks in a dual connectivity (DC) mode so that a user equipment (UE) can transmit and receive data on multiple component carriers from two cell groups to increase the throughput of the UE. In DC, the LTE e-NodeB (eNB) served as the master node (MN) and the 5G g-NodeB (gNB) served as the secondary node (SN).

In NR-DC, both the MN and SN are gNBs of the 5G network, with component carriers of the MN being in a first frequency range (FR1) and component carriers of the SN being in a second frequency range (FR2). Typically, the FR1 frequency range is below 7.225 GHz and the FR2 frequency range is in the mmWave frequency above 24.250 GHz. However, when communicating with the 5G network, the UE is typically configured with one or more bandwidth parts (BWPs) of FR1 and/or FR2 on which to communicate. During operation, the 5G network may switch the current BWP of FR1 and/or FR2 to a different BWP. Document ZTE: "Draft CR on PUCCH transmission drop due to BWP switching",3GPP DRAFT; R1-1906406 DRAFT CR ON PUCCH TRANSMISSION DROP DUE TO BWP SWITCHING, 3RD GENERATION PARTNERSHIP PROJECT (3GPP), MOBILE COMPETENCE CENTRE ; 650, ROUTE DES LUCIOLES ; F-06921 SOPHIA-ANTIPOLI,vol. RAN WG1, no. Reno, USA; 20190513 - 20190517 3 May 2019 (2019-05-03),discloses aspects related to PUCCH.

### Summary

Some exemplary embodiments relate to a base station having a transceiver and a processor. The transceiver is configured to connect to a user equipment (UE). The processor is configured to transmit a command to the UE to perform a BWP switch, and monitor a physical uplink control channel (PUCCH) for an acknowledgement or a negative acknowledgement (ACK/NACK) for a predetermined period of time, wherein the predetermined period of time is the sum of a standard-defined period of time between transmission of a radio resource control (RRC) command and receipt of the ACK/NACK, a time to process an RRC command, and a time to perform a BWP switch.

Other exemplary embodiments are related to a user equipment (UE) having a transceiver and a processor. The transceiver is configured to simultaneously connect to a first cell of a first cell group (CG) and a second cell of a second CG. The processor is configured to receive, from the first cell of the first CG, a bandwidth part (BWP) switch command, prior to performing a BWP switch operation in response to the BWP switch command, transmit, to the second cell of the second CG, an indication of the BWP switch command and perform the BWP switch operation.

Still other exemplary embodiments relate to a base station having a transceiver and a processor. The transceiver is configured to connect to a user equipment (UE). The processor is configured to receive an indication that a first bandwidth part (BWP) switch command was received by the UE from a base station of a second CG, determine that the UE should perform a BWP switch for the first CG, and transmit, after a predetermined time based on at least the indication, a second BWP switch command to the UE.

Further exemplary embodiments relate to a method performed by a cell of a first cell group (CG) that is connected to a user equipment (UE). The method includes transmitting a command to the UE to perform a BWP switch and monitoring a physical uplink control channel (PUCCH) for an acknowledgement or a negative acknowledgement (ACK/NACK) for a predetermined period of time, wherein the predetermined period of time is the sum of a standard-defined period of time between transmission of a radio resource control (RRC) command and receipt of the ACK/NACK, a time to process an RRC command, and a time to perform a BWP switch.

### Brief Description of the Drawings

Fig. 1 shows an exemplary network arrangement according to various exemplary embodiments.
Fig. 2 shows an exemplary UE according to various exemplary embodiments.
Fig. 3 shows an exemplary base station configured to establish a connection with a user equipment according to various exemplary embodiments.
Fig. 4A shows exemplary network BWP switch signaling in a NR-DC environment according to various exemplary embodiments.
Fig. 4B is a signaling diagram illustrating RRC-based BWP switching in a NR-DC environment according to various exemplary embodiments.
Fig. 4C is a signaling diagram illustrating RRC-based BWP switching in a NR-DC environment according to various exemplary embodiments.
Fig. 5 is a signaling diagram illustrating DCI-based BWP switching in a NR-DC environment according to various exemplary embodiments.

### Detailed Description

The exemplary embodiments may be further understood with reference to the following description and the related appended drawings, wherein like elements are provided with the same reference numerals. The exemplary embodiments relate to bandwidth part (BWP) switching in a new radio (NR) dual connectivity (DC) environment.

The exemplary embodiments are described with regard to a UE. However, the use of a UE is merely for illustrative purposes. The exemplary embodiments may be utilized with any electronic component that may establish a connection with a network and is configured with the hardware, software, and/or firmware to exchange information and data with the network. Therefore, the UE as described herein is used to represent any electronic component.

The exemplary embodiments are also described with regard to a network that includes 5G new radio NR radio access technology (RAT). However, in some embodiments, the network may also include a Long-Term Evolution (LTE) RAT even though the following description will focus primarily on 5G NR RAT.

Bandwidth part (BWP) switching occurs during new radio (NR) dual connectivity (DC) to switch a UE from one BWP to another BWP. However, because the master node (MN) of a first cell group (CG1) and the secondary node (SN) of a second cell group (CG2) do not communicate with one another, a BWP switch on the carrier(s) of CG1 may be occurring at a time when CG2 requests a BWP switch on its carriers. One such issue arises with partial overlapping of BWP switch commands from different CGs in radio resource control (RRC)-based BWP switching. After the UE receives an RRC over a physical downlink shared channel (PDSCH) containing a BWP switch command (e.g., from CG1), there is a time delay (T_{RRCProcessingDelay}) for processing the RRC command and a time delay for performing the BWP switch (T_{BWPSwitchDelayRRC}) during which the UE is unable to process an RRC-based BWP switch command from the other CG (e.g., CG2). As such, if CG2 monitors the physical uplink control channel (PUCCH) for an ACK/NACK from the UE for the standard-defined time period (K₁), it will not receive an acknowledgement due to the CG1-initiated BWP switch occurring at the UE.

According to some exemplary embodiments, after CG1 sends an RRC-based BWP switch command to the UE, CG1 may inform CG2 that it has initiated a BWP switch at the UE. As such, if CG2 sends an RRC-based BWP switch command over the PDSCH during the time the UE is processing the RRC and BWP switch from CG1, CG2 will monitor the PUCCH for a longer period of time than K₁ for the ACK/NACK from the UE. This longer period of time takes the RRC processing and BWP switch delays into account.

Another issue arises with partial overlapping of BWP switch commands from different CGs in downlink control information (DCI)-based BWP switching. DCI-based BWP switching is the activation by DCI of one of the bandwidths configured during RRC. Because the CGs are not in communication with one another, one CG (e.g., CG2) may not be aware of a previously sent DCI-based BWP switch initiated by the other CG (e.g., CG2). As such, if CG2 sends a DCI-based BWP switch command to the UE before the UE has completed the CG1-initiated BWP switch, one of two issues may arise: (1) the CG2-initiated BWP switch will not begin until after the CG1-initiated BWP switch is completed, resulting in an unexpected switch delay from CG2's point of view; or (2) the DCI from CG2 will not be successfully received by the UE due to the interruption of the CG1-initiated BWP switch.

According to other exemplary embodiments, after the UE receives a DCI-based BWP switch command from a CG (e.g., CG1), the UE may inform the other CG (e.g., CG2) of the command so that the other CG (CG2) does not send a BWP switch command during the time it takes for the UE to execute the CG1-initiated BWP switch. Throughout this description, it is considered that CG1 is the first cell group to send the BWP switch command and CG2 is the other cell group. However, those skilled in the art will understand that the exemplary embodiments are applicable to the opposite operations where CG2 is the first cell group to initiate the BWP switch.

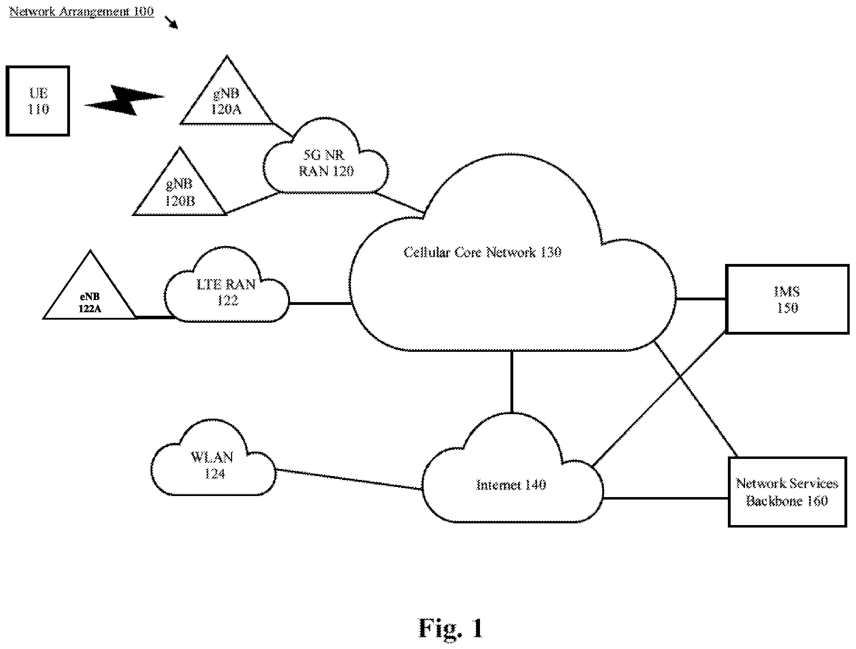

Fig. 1 shows an exemplary network arrangement 100 according to various exemplary embodiments. The exemplary network arrangement 100 includes a UE 110. It should be noted that any number of UE may be used in the network arrangement 100. Those skilled in the art will understand that the UE 110 may alternatively be any type of electronic component that is configured to communicate via a network, e.g., mobile phones, tablet computers, desktop computers, smartphones, phablets, embedded devices, wearables, Internet of Things (IoT) devices, etc. It should also be understood that an actual network arrangement may include any number of UE being used by any number of users. Thus, the example of a single UE 110 is merely provided for illustrative purposes.

The UE 110 may be configured to communicate with one or more networks. In the example of the network configuration 100, the networks with which the UE 110 may wirelessly communicate are a 5G New Radio (NR) radio access network (5G NR-RAN) 120, an LTE radio access network (LTE-RAN) 122 and a wireless local access network (WLAN) 124. However, it should be understood that the UE 110 may also communicate with other types of networks and the UE 110 may also communicate with networks over a wired connection. Therefore, the UE 110 may include a 5G NR chipset to communicate with the 5G NR-RAN 120, an LTE chipset to communicate with the LTE-RAN 122 and an ISM chipset to communicate with the WLAN 124.

The 5G NR-RAN 120 and the LTE-RAN 122 may be portions of cellular networks that may be deployed by cellular providers (e.g., Verizon, AT&T, Sprint, T-Mobile, etc.). These networks 120, 122 may include, for example, cells or base stations (Node Bs, eNodeBs, HeNBs, eNBS, gNBs, gNodeBs, macrocells, microcells, small cells, femtocells, etc.) that are configured to send and receive traffic from UE that are equipped with the appropriate cellular chip set. The WLAN 124 may include any type of wireless local area network (WiFi, Hot Spot, IEEE 802.11x networks, etc.).

The UE 110 may connect to the 5G NR-RAN 120 via the gNB 120A and/or the gNB 120B. The gNBs 120A and 120B may be configured with the necessary hardware (e.g., antenna array), software and/or firmware to perform massive multiple in multiple out (MIMO) functionality. Massive MIMO may refer to a base station that is configured to generate a plurality of beams for a plurality of UE. During operation, the UE 110 may be within range of a plurality of gNBs. Thus, either simultaneously or alternatively, the UE 110 may connect to the 5G NR-RAN 120 via the gNBs 120A and 120B. In the present example, it may be considered that the gNB 120A is part of CG1 and the gNB 120B is part of CG2. Thus, in DC operation, the UE 110 may be simultaneously connected to gNB 120 A (CG1) and gNB 120B (CG2). Reference to two gNBs 120A, 120B is merely for illustrative purposes. The exemplary embodiments may apply to any appropriate number of gNBs. Further, the UE 110 may communicate with the eNB 122A of the LTE-RAN 122 to transmit and receive control information used for downlink and/or uplink synchronization with respect to the 5G NR-RAN 120 connection.

Those skilled in the art will understand that any association procedure may be performed for the UE 110 to connect to the 5G NR-RAN 120. For example, as discussed above, the 5G NR-RAN 120 may be associated with a particular cellular provider where the UE 110 and/or the user thereof has a contract and credential information (e.g., stored on a SIM card). Upon detecting the presence of the 5G NR-RAN 120, the UE 110 may transmit the corresponding credential information to associate with the 5G NR-RAN 120. More specifically, the UE 110 may associate with a specific base station (e.g., the gNB 120A of the 5G NR-RAN 120).

In addition to the networks 120 and 122 the network arrangement 100 also includes a cellular core network 130. The cellular core network 130 may be considered to be the interconnected set of components that manages the operation and traffic of the cellular network.

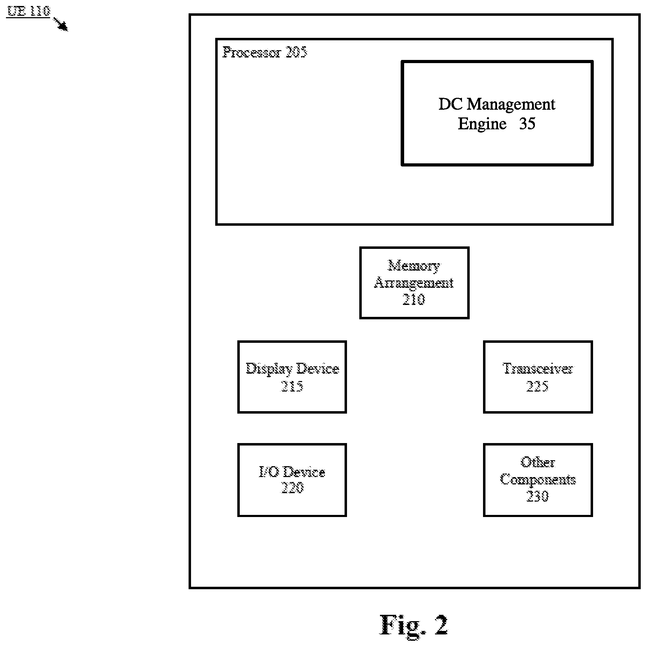

Fig. 2 shows an exemplary UE 110 according to various exemplary embodiments. The UE 110 will be described with regard to the network arrangement 100 of Fig. 1. The UE 110 may represent any electronic device and may include a processor 205, a memory arrangement 210, a display device 215, an input/output (I/O) device 220, a transceiver 225 and other components 230. The other components 230 may include, for example, an audio input device, an audio output device, a battery that provides a limited power supply, a data acquisition device, ports to electrically connect the UE 110 to other electronic devices, one or more antenna panels, etc. For example, the UE 110 may be coupled to an industrial device via one or more ports.

The processor 205 may be configured to execute a plurality of engines of the UE 110. For example, the engines may include a DC management engine 235. The DC management engine 235 may perform various operations related to DC such as, for example, performing a BWP switch.

The above referenced engine being an application (e.g., a program) executed by the processor 205 is only exemplary. The functionality associated with the engine may also be represented as a separate incorporated component of the UE 110 or may be a modular component coupled to the UE 110, e.g., an integrated circuit with or without firmware. For example, the integrated circuit may include input circuitry to receive signals and processing circuitry to process the signals and other information. The engines may also be embodied as one application or separate applications. In addition, in some UE, the functionality described for the processor 205 is split among two or more processors such as a baseband processor and an applications processor. The exemplary embodiments may be implemented in any of these or other configurations of a UE.

The memory arrangement 210 may be a hardware component configured to store data related to operations performed by the UE 110. The display device 215 may be a hardware component configured to show data to a user while the I/O device 220 may be a hardware component that enables the user to enter inputs. The display device 215 and the I/O device 220 may be separate components or integrated together such as a touchscreen. The transceiver 225 may be a hardware component configured to establish a connection with the 5G NR-RAN 120, the LTE-RAN 122, the WLAN 124, etc. Accordingly, the transceiver 225 may operate on a variety of different frequencies or channels (e.g., set of consecutive frequencies).

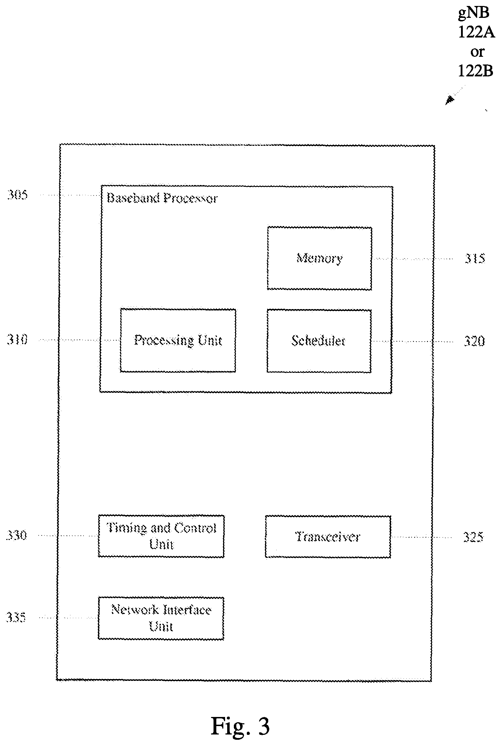

Fig. 3 shows the gNB 120A or 120B of the 5G NR RAN 120 configured to establish a connection with the UE 110 according to various exemplary embodiments. As discussed above, the gNB 120A or 120B may be any access point or base station of the 5G NR RAN 120 that enables the UE 110 to establish a connection to the 5G NR RAN 120. The gNB 120A or 120B may be one of a plurality of base stations deployed for the 5G NR RAN 120. The gNB 120A or 120B may provide a portion of the operating area of the 5G NR RAN 120. The gNB 120A or 120B may include a baseband processor 305, a transceiver 325, a timing and control unit 330, and a network interface unit 335.

The baseband processor 305 may provide a radio communication with the UE 110 via the transceiver 325 (which may be coupled to an antenna (not shown)). The transceiver 325 may be substantially similar to the transceiver 225 of the UE 110 such as operating on a predetermined frequency or channel of the 5G NR RAN 120. It should be noted that the transceiver 225 may include a separate transmitter and receiver or a combined unit that performs the functionalities of the transmitter and receiver. The baseband processor 305 may be configured to operate according to a wireless communications standard based upon the 5G NR RAN 120. The baseband processor 305 may include a processing unit 310 to process relevant information for the gNB 120A or 120B. The baseband processor 305 may also provide additional baseband signal processing operations as may be utilized such as a UE registration, a channel signal information transmission, a radio resource management, a connected discontinuous reception (C-DRX) functionality, etc. The baseband processor 305 may also include a memory arrangement 310 that is in communication with the processing unit 310 to store the relevant information including the various signal processing operations for the gNB 120A or 120B. The baseband processor 305 may further include a scheduler 320 which may provide scheduling decisions for the UE 110 serviced by the gNB 120A or 120B.

The timing and control unit 330 may monitor operations of the baseband processor 305. The timing and control unit 330 may also monitor the operations of the network interface unit 335. The timing and control unit 330 may accordingly provide appropriate timing and control signals to these units. The network interface unit 335 may provide a bi-directional interface for the gNB 120A or 120B to communicate with other network components of the 5G NR RAN 120 such as a core network or a back-end network. This may enable a facilitation of administrative and call-management functionalities for the UE 110 operating in the 5G NR RAN 120 through the gNB 120A or 120B.

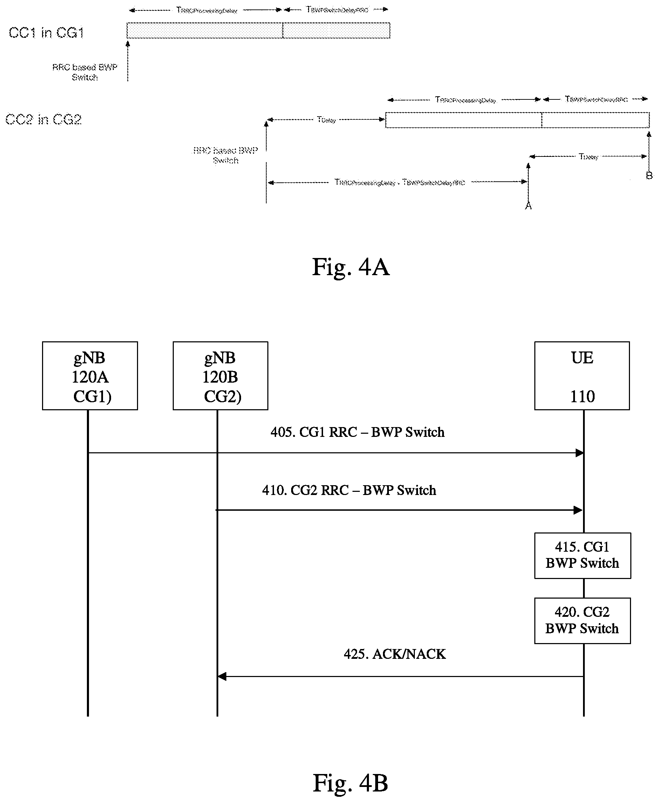

Fig. 4A shows exemplary network BWP switch signaling in a NR-DC environment according to various exemplary embodiments. In Fig. 4A and the description of the subsequent figures, CG1 may be the primary cell (PCell) and CG2 may be the secondary cell (PSCell) of the NR-DC. However, as described above, the roles of the cell groups may be reversed. As illustrated in Fig. 4A, after a first cell group (CG1) initiates an RRC-based BWP switched for its component carrier (s) (CC1), there is a time delay (T_{RRCProcessingDelay}) for processing the RRC followed by a time delay for performing the CG1-initiated BWP switch (T_{BWPSwitchDelayRRC}). During T_{BWPSwitchDelayRRC}, the UE does not transmit or receive any information. If a second cell group (CG2) initiates an RRC-based BWP switch for its component carriers (CC2) during T_{RRCProcessingDelay} and/or T_{BWPSwitchDelayRRC}, the processing of the RRC by CG2 will not begin until after the CG1-initiated BWP switch has been executed. Point A in Fig. 4A denotes the point in time at which the execution of the CG2-initiated BWP switch would normally be completed. However, because of the delay (T_{Delay}) between the time the CG2 RRC-based BWP switch command is received and the time the processing of this command can begin, the actual completion of the CG2-initiated BWP switch does not occur until point B.

If CG2 monitors the physical uplink control channel (PUCCH) for an ACK/NACK from the UE for the standard-defined time period (K₁), it will not receive such an acknowledgement due to the CG1-initiated BWP switch occurring at the UE. According to some exemplary embodiments, CG2 may monitor the PUCCH for K1+ T_{RRCProcessingDelay} + T_{BWPSwitchDelayRRC} period of time to determine when it would be suitable to begin transmission on the new BWP identified by the CG2 RRC-based BWP switch command.

Fig. 4B is a signaling diagram illustrating RRC-based BWP switching in a NR-DC environment according to various exemplary embodiments. According to some exemplary embodiments, at 405, a first gNB (e.g., gNB 120A) of a first cell group (CG1) sends an RRC-based BWP switch command to the UE 110. In some embodiments, at 410, the gNB 120B of CG2 may send an RRC-based BWP switch command over the PDSCH to the UE 110 during the time that the UE 110 is still processing the RRC and BWP switch from CG1. However, because the UE 110 is processing the RRC and BWP switch commend from CG1, the UE 110 cannot process the RRC sent by the gNB 120B. As such, the gNB 120B of CG2 will not receive an ACK/NACK in the standard-defined time period K₁. Therefore, in some embodiments, CG2 will monitor the PUCCH for a longer period of time than K₁ for the ACK/NACK from the UE 110. As noted above, this period of time may be equal to K1+ T_{RRCProcessingDelay} + T_{BWPSwitchDelayRRC}. At 415, the UE 110 executes the CG1-initiated BWP switch. Although not shown, the UE 110 may send an ACK/NACK to the gNB 120A to notify CG1 that the CG1-initiated BWP switch has been executed. At 420, the UE 110 processes the RRC from CG2 and performs the CG2-initiated BWP switch. At 425, the UE 110 sends an acknowledgement (ACK/NACK) to the gNB 120B. In some embodiments, CG2 may alternatively monitor the PUCCH of gNB 120A for an ACK/NACK from the UE 110 to the gNB 120A before CG2 sends an RRC-based BWP switch command to the UE 110.

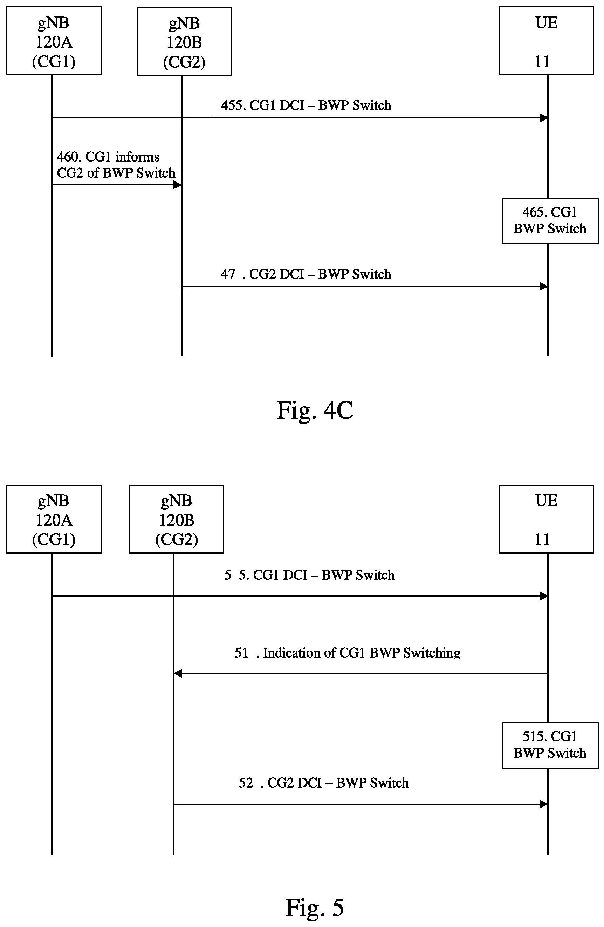

Fig. 4C is a signaling diagram illustrating RRC-based BWP switching in a NR-DC environment according to various exemplary embodiments. According to some exemplary embodiments, at 455, a first gNB (e.g., gNB 120A) of a first cell group (CG1) sends an RRC-based BWP switch command to the UE 110. Since a second cell group (CG2) is unaware that this has occurred, in some embodiments, at 460, the gNB 120A may communicate with a second gNB (e.g., gNB 120B) of CG2 to inform CG2 that CG1 has initiated a RRC-based BWP switch at the UE 110. At 465, the UE 110 executes the CG1-initiated BWP switch. Because CG2 is aware of the RRC-based BWP switch initiated by CG1, CG2 does not send a RRC-based BWP switch command to the UE 110 until 470, after the UE 110 has executed the CG1-initiated BWP switch. This ensures that the CG2-initiated BWP switch does not overlap with the CG1-initiated BWP switch.

Fig. 5 is a signaling diagram illustrating DCI-based BWP switching in a NR-DC environment according to various exemplary embodiments. In DCI-based BWP switching, each of the CGs have already configured up to four BWPs via RRC. Each CG then performs a BWP switch via DCI to activate one of the previously configured BWPs. At 505, a first gNB (e.g., gNB 120A) of a first CG (CG1) transmits a DCI-based BWP switch command to the UE 110. Because a second CG (CG2) is unaware of this command, at 510, the UE 110 may provide an indication of CG1-initiated BWP switch to a second gNB (e.g., gNB 120B) of CG2 once the UE 110 has parsed the DCI from the gNB 120A. The UE 110 sends this notification before processing the BWP switch because during the BWP switching, the UE does not transmit or receive any information. At 515, the UE 110 executes the CG1-initiated BWP switch. Because CG2 is aware of the DCI-based BWP switch initiated by CG1, CG2 does not send a DCI-based BWP switch command to the UE 110 until 520, after the UE 110 has executed the CG1-initiated BWP switch. This ensures that the CG2-initiated BWP switch is not delayed and that the DCI from CG2 is successfully received by the UE 110.

Although this application described various embodiments each having different features in various combinations, those skilled in the art will understand that any of the features of one embodiment may be combined with the features of the other embodiments in any manner not specifically disclaimed or which is not functionally or logically inconsistent with the operation of the device or the stated functions of the disclosed embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Those skilled in the art will understand that the above-described exemplary embodiments may be implemented in any suitable software or hardware configuration or combination thereof. An exemplary hardware platform for implementing the exemplary embodiments may include, for example, an Intel x86 based platform with compatible operating system, a Windows OS, a Mac platform and MAC OS, a mobile device having an operating system such as iOS, Android, etc. In a further example, the exemplary embodiments of the above described method may be embodied as a program containing lines of code stored on a non-transitory computer readable storage medium that, when compiled, may be executed on a processor or microprocessor.

It will be apparent to those skilled in the art that various modifications may be made in the present disclosure, without departing from the scope of the present disclosure, as defined by the appended claims.

Thus, it is intended that the present disclosure cover modifications and variations of this disclosure provided they come within the scope of the appended claims.

## Claims

1. A base station belonging to a first cell group, CG, comprising:
a transceiver configured to connect to a user equipment, UE; and
a processor configured to:
transmit a command to the UE to perform a BWP switch, and
monitor a physical uplink control channel, PUCCH, for an acknowledgement or a negative acknowledgement, ACK/NACK, for a predetermined period of time,
wherein the predetermined period of time is the sum of a standard-defined period of time between transmission of a radio resource control, RRC, command and receipt of the ACK/NACK, a time to process an RRC command, and a time to perform a BWP switch.

2. The base station of claim 1, wherein the processor is further configured to transmit data to the UE on a BWP corresponding to the BWP switch after receiving the ACK.

3. The base station of claim 1, wherein the command to perform the BWP switch comprises a radio resource control, RRC, command.

4. The base station of claim 1, wherein the UE is simultaneously connected to the base station of the first CG and the base station of the second CG in a dual connectivity, DC, mode.

5. The base station of claim 4, wherein the base station of the first CG and the base station of the second CG are 5G new radio, NR, cells.

6. A method, comprising:
at a cell of a first cell group, CG, that is connected to a user equipment, UE:
transmitting a command to the UE to perform a BWP switch; and
monitoring a physical uplink control channel, PUCCH, for an acknowledgement or a negative acknowledgement, ACK/NACK, for a predetermined period of time,
wherein the predetermined period of time is the sum of a standard-defined period of time between transmission of a radio resource control, RRC, command and receipt of the ACK/NACK, a time to process an RRC command, and a time to perform a BWP switch.

7. The method of claim 6, wherein the command to perform the BWP switch comprises a radio resource control, RRC, command.

8. The method of claim 6, wherein the UE is simultaneously connected to the cell of the first CG and the cell of the second CG in a dual connectivity, DC, mode.

9. The method of claim 8, wherein the cell of the first CG and the cell of the second CG are 5G new radio, NR, cells.

## Patentansprüche

1. Basisstation, die zu einer ersten Zellgruppe, CG, gehört, umfassend:
einen Transceiver, der konfiguriert ist, um sich mit einer Benutzeranlage, UE, zu verbinden; und
einen Prozessor, der konfiguriert ist, um:
einen Befehl an die UE zu übertragen, um einen BWP-Wechsel durchzuführen, und
einen physischen Uplink-Steuerkanal, PUCCH, auf eine Bestätigung oder eine negative Bestätigung, ACK/NACK, für einen vorgegebenen Zeitraum zu überwachen,
wobei der vorgegebene Zeitraum die Summe eines standarddefinierten Zeitraums zwischen einer Übertragung eines Funkressourcensteuerungsbefehls, RRC-Befehl, und einem Empfang der ACK/NACK, einer Zeit, um einen RRC-Befehl zu verarbeiten, und einer Zeit, um einen BWP-Wechsel durchzuführen, ist.

2. Basisstation nach Anspruch 1, wobei der Prozessor ferner konfiguriert ist, um Daten an die UE auf einem BWP zu übertragen, der dem BWP-Wechsel nach dem Empfang der ACK entspricht.

3. Basisstation nach Anspruch 1, wobei der Befehl, um den BWP-Wechsel durchzuführen, einen Funkressourcensteuerungsbefehl, RRC-Befehl, umfasst.

4. Basisstation nach Anspruch 1, wobei die UE in einem Dual-Connectivity-Modus, DC-Modus, gleichzeitig mit der Basisstation der ersten CG und der Basisstation der zweiten CG verbunden ist.

5. Basisstation nach Anspruch 4, wobei die Basisstation der ersten CG und die Basisstation der zweiten CG 5G New Radio-Zellen, NR-Zellen, sind.

6. Verfahren, umfassend:
an einer Zelle einer ersten Zellgruppe, CG, die mit einer Benutzeranlage, UE, verbunden ist:
Übertragen eines Befehls an die UE, um einen BWP-Wechsel durchzuführen; und
Überwachen eines physischen Uplink-Steuerkanals, PUCCH, auf eine Bestätigung oder eine negative Bestätigung, ACK/NACK, für einen vorgegebenen Zeitraum,
wobei der vorgegebene Zeitraum die Summe eines standarddefinierten Zeitraums zwischen einer Übertragung eines Funkressourcensteuerungsbefehls, RRC-Befehl, und einem Empfang der ACK/NACK, einer Zeit, um einen RRC-Befehl zu verarbeiten, und einer Zeit, um einen BWP-Wechsel durchzuführen, ist.

7. Verfahren nach Anspruch 6, wobei der Befehl, um den BWP-Wechsel durchzuführen, einen Funkressourcensteuerungsbefehl, RRC-Befehl, umfasst.

8. Verfahren nach Anspruch 6, wobei die UE in einem Dual-Connectivity-Modus, DC-Modus, gleichzeitig mit der Zelle der ersten CG und der Zelle der zweiten CG verbunden ist.

9. Verfahren nach Anspruch 8, wobei die Zelle der ersten CG und die Zelle der zweiten CG 5G New Radio-Zellen, NR-Zellen, sind.

## Revendications

1. Station de base appartenant à un premier groupe de cellules, CG, comprenant :
un émetteur-récepteur configuré pour se connecter à un équipement utilisateur, UE ; et
un processeur configuré pour :
transmettre une instruction à l'UE pour mettre en œuvre une commutation de BWP, et
surveiller un canal de commande de liaison montante physique, PUCCH, pour un accusé de réception ou un accusé de réception négatif, ACK/NACK, pendant un laps de temps prédéterminé,
dans laquelle le laps de temps prédéterminé est la somme d'un laps de temps à définition standard entre la transmission d'une instruction de commande de ressource radio, RRC, et la réception de l'ACK/NACK, d'un temps pour traiter l'instruction RRC, et d'un temps pour mettre en œuvre une commutation de BWP.

2. Station de base selon la revendication 1, dans laquelle le processeur est configuré en outre pour transmettre des données à l'UE sur une BWP correspondant à la commutation de BWP après réception de l'ACK.

3. Station de base selon la revendication 1, dans laquelle l'instruction pour mettre en œuvre la commutation de BWP comprend une instruction de commande de ressource radio, RRC.

4. Station de base selon la revendication 1, dans laquelle l'UE est connecté simultanément à la station de base du premier CG et à la station de base du second CG dans un mode de connectivité double, DC.

5. Station de base selon la revendication 4, dans laquelle la station de base du premier CG et la station de base du second CG sont des cellules 5G nouvelle radio, NR.

6. Procédé, comprenant :
au niveau d'une cellule d'un premier groupe de cellules, CG, qui est connectée à un équipement utilisateur, UE :
la transmission d'une instruction à l'UE pour mettre en œuvre une commutation de BWP ; et
la surveillance d'un canal de commande de liaison montante physique, PUCCH, pour un accusé de réception ou un accusé de réception négatif, ACK/NACK, pendant un laps de temps prédéterminé,
dans lequel le laps de temps prédéterminé est la somme d'un laps de temps à définition standard entre la transmission d'une instruction de commande de ressource radio, RRC, et la réception de l'ACK/NACK, d'un temps pour traiter l'instruction RRC, et d'un temps pour mettre en œuvre une commutation de BWP.

7. Procédé selon la revendication 6, dans lequel l'instruction pour mettre en œuvre la commutation de BWP comprend une instruction de commande de ressource radio, RRC.

8. Procédé selon la revendication 6, dans lequel l'UE est connecté simultanément à la cellule du premier CG et à la cellule du second CG dans un mode de connectivité double, DC.

9. Procédé selon la revendication 8, dans lequel la cellule du premier CG et la cellule du second CG sont des cellules 5G nouvelle radio, NR.
